# EUROPÄISCHE PATENTSCHRIFT

(11) **EP 0 489 286 B1**
(45) Veröffentlichungstag und Bekanntmachung des Hinweises auf die Patenterteilung: **16.08.1995**
(21) Anmeldenummer: 91119398.5
(22) Anmeldetag: 14.11.1991
(51) Int. Cl.: G01J 3/28

(54) **Diodenzeilen-Spektrometer**
Diode line spectrometer
Spectromètre à alignement de diodes

(30) Priorität: 04.12.1990 DE 4038638
(43) Veröffentlichungstag der Anmeldung: 10.06.1992
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Bittner,Reinhold, W-7070 Schwäbisch Gmünd (DE)

(56) Entgegenhaltungen:
- EP-A- 0 194 612
- EP-A- 0 278 738
- WO-A-82/01631
- OPTICS LETTERS, Bd. 6, Nr. 12, Dezember 1981, New York, US, Seiten 639-641; H. W.YEN ET AL.: "Planar Rowland spectrometer for fiber-optic wavelength demultiplexing"

## Beschreibung

Die Erfindung betrifft ein Diodenzeilen-Spektrometer mit Konkavgitter und transparentem Tragkörper.

Aus der DE 3446726 A sind Spektrometer und Demultiplexer mit mechanisch geteiltem oder holographischem Konkavgitter bekannt. Eintrittsspalt und Austrittsebene liegen im wesentlichen auf dem Rowland-Kreis. Bei einer kompakten und robusten Ausführung sind die optischen Bauteile an einem Glas- oder Kunststoffkörper angebracht. Es ist auch bekannt, bei derartigen Spektrometern eine Diodenzeile in der Austrittsebene anzuordnen.

Beim erforderlichen Verkitten der Diodenzeile mit dem Spektrometer besteht jedoch eine erhebliche Bruchgefahr. Zudem sind handelsübliche Diodenzeilen in Gehäuse eingebaut und können deswegen nicht direkt auf den Spektrometerkörper aufgebracht werden.

Aus H.W. Yen et al., Optics Lett. 6 (1981), p. 639-641, ist ein planares Rowland-Spektrometer bekannt, dessen Grundkörper ein Schichtwellenleiter ist, auf den ein zylindrisch konkaves Gitter aufgebracht ist, und der auf der dem Gitter abgewandten Seite die Kontur des Rowland-Kreises aufweist. Radial angeordnete Lichtleitfasern dienen als Signalausgang.

Es ist die Aufgabe der Erfindung, ein gattungsgemäßes Diodenzeilen-Spektrometer so auszubilden, daß es zur Verwendung serienmäßiger Diodenzeilen geeignet ist, Montage und Justierung einfach sind, und die Abbildungsfehler, insbesondere die Koma, gut korrigiert sind.

Gelöst wird diese Aufgabe durch ein Diodenzeilen-Spektrometer mit den Merkmalen des Anspruchs 1.

Vorteilhafte Ausgestaltungen sind Gegenstand der abhängigen Ansprüche 2 bis 7.

Die Erfindung geht davon aus, daß eine sichere Montage serienmäßiger Diodenzeilen einen Luftspalt gegenüber dem transparenten Tragkörper erfordert. Damit wird dann gleichzeitig die Möglichkeit zur Korrektur von Fertigungsabweichungen des Tragkörpers usw. durch Verschieben und Verkippen der Diodenzeile zur Justierung eröffnet.

Allerdings ist die Grenzfläche des Tragkörpers zur Luft jetzt eine zusätzliche brechende Fläche, durch die Bildfehler, insbesondere Koma entstehen. Die Erfindung erlaubt die Nutzung der Vorteile des Luftspalts ohne dessen Nachteile durch Einführung einer gekrümmten anstatt einer planen optischen Fläche. Dies ist fertigungstechnisch kein Problem. Prinzipiell genügt, bei nicht zu großer Divergenz des durch den Eintrittsspalt tretenden Beleuchtungsstrahls, eine zylindrische Form. Verwendet man einen Lichtwellenleiter wie in H.W. Yen, a.a.O., dann gilt dies ebenfalls. Eine sphärische Form ist ohne weiteres geeignet und fertigungstechnisch einfacher als eine zylindrische.

Im Gegensatz zu H.W. Yen, a.a.O., wo der Tragkörper auf der gitterabgewandten Seite dem Rowland-Kreis folgt, dessen Radius der halbe Gitterradius ist und dessen Krümmungsmittelpunkt in Linsenmitte liegt, sind bei der hier gewählten Anordnung beide Krümmungsradien vorzugsweise nur wenig unterschiedlich und liegen beide Krümmungsmittelpunkte nahe dem Krümmungsscheitel der jeweils anderen Konvexfläche.

Im folgenden wird die Erfindung anhand der Schemazeichnung und eines Ausführungsbeispiels näher erläutert.

Ein Konkavgitter (1) ist auf einen transparenten Tragkörper (2), z.B. aus Glas der Sorte UBK 7 (Schott), auf die erste Konvexfläche (21) aufgebracht. Zwischen der zweiten Konvexfläche (22) und einer Diodenzeile (3) in einem Gehäuse (31) ist ein kleiner Luftabstand d, z.B. von 1,8 mm, vorgesehen. In einjustierter Stellung ist die Diodenzeile (3) durch Epoxykleber (32) o.ä. an dem Tragkörper (2) befestigt.

Im Beispiel ist der Tragkörper (2) eine sphärische Linse der Mittendicke 28,26 mm, der Radius der ersten Konvexfläche (21) und des Gitters (1) beträgt 29,64 mm und der Radius der zweiten Konvexfläche (22) beträgt 28,18 mm, unterscheidet sich also nur wenig.

Ein Eintrittsspalt (4) von z.B. 50 »m Breite und 2500 »m Höhe ist auf der zweiten Konvexfläche (22) neben der Diodenzeile (3) angeordnet.

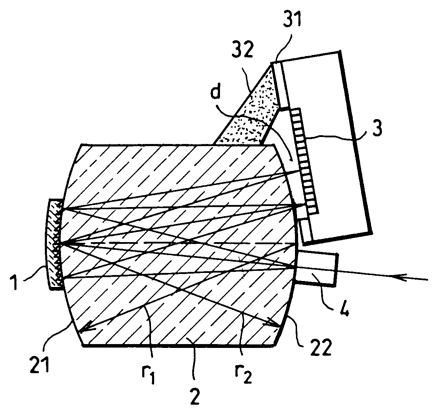

Das spektral zu analysierende Licht kann dem Eintrittsspalt (4) auf beliebige Weise zugeführt werden, z.B. durch eine in der Zeichnung nicht dargestellte Lichtleitfaser.

Die Elektronik und evtl. Software zum Betrieb der Diodenzeile (3) und zur Signalauswertung ist ebenfalls nicht dargestellt und ist für beliebige Anwendungen von Fotodioden-Zeilen allseits bekannt.

Mit einem Gitter von 366 Linien pro Millimeter hat das Spektrometer des Beispiels eine von 360 bis 780 nm Wellenlänge gut lineare Dispersion von 132 nm/mm und mit Einzel-Fotodioden von 25 »m Breite in der Diodenzeile (3) wird eine Auflösung besser als 10 nm erreicht.

Die genaue Bestimmung der Linsengeometrie des Tragkörpers (2), der Lage und Größe des Eintrittsspaltes (4) und der Lage der Diodenzeile (3) zur Minimierung aller Abbildungsfehler und zur optimalen Linearisierung des Spektrums wird im Rahmen der erfindungsgemäßen Konstruktion mit den bekannten Mitteln der Optikrechnung erreicht.

Als weitere Verbesserung kann dabei statt eines primär durch mechanische Gitterteilung definierten Gitters (1) ein solches mit weiterer Fehlerkorrektur mittels holographischer Herstellung verwendet werden.

Statt Luft kann in dem Spalt zwischen Tragkörper (2) und Diodenzeile (3) auch ein anderes Medium vorgesehen werden.

## Patentansprüche

1. Diodenzeilen-Spektrometer mit Konkavgitter (1) und transparentem Tragkörper (2), wobei der Tragkörper (2) eine bikonvexe Linse ist, deren eine Konvexfläche (21) das Konkavgitter (1) trägt, dadurch gekennzeichnet, daß die zweite Konvexfläche (22) des Tragkörpers in geringem Abstand (d) einer Diodenzeile (3) gegenüberliegt und zwischen zweiter Konvexfläche (22) und Diodenzeile (3) Luft oder ein anderes Medium vorgesehen ist.

2. Diodenzeilen-Spektrometer nach Anspruch 1, dadurch gekennzeichnet, daß die zweite Konvexfläche (22) den Eintrittsspalt (4) trägt.

3. Diodenzeilen-Spektrometer nach Anspruch 1 oder Anspruch 2, dadurch gekennzeichnet, daß sich die beiden Krümmungsradien (r₁, r₂) des Tragkörpers (2) nur wenig unterscheiden.

4. Diodenzeilen-Spektrometer nach mindestens einem der Ansprüche 1-3, dadurch gekennzeichnet, daß die Krümmungsmittelpunkte beider Konvexflächen (21, 22) jeweils nahe dem Krümmungsscheitel der anderen Konvexfläche (22, 21) liegen.

5. Diodenzeilen-Spektrometer nach mindestens einem der Ansprüche 1-4, dadurch gekennzeichnet, daß das Konkavgitter (1) holographisch korrigiert ist.

6. Diodenzeilen-Spektrometer nach mindestens einem der Ansprüche 1-5, dadurch gekennzeichnet, daß der Tragkörper (2) sphärisch ist.

7. Diodenzeilen-Spektrometer nach mindestens einem der Ansprüche 1-5, dadurch gekennzeichnet, daß der Tragkörper (2) zylindrisch ist.

## Claims

1. A diode-array spectrometer with a concave grating (1) and a transparent carrier body (2), where
the carrier body (2) is a biconvex lens, one of its convex surfaces (21) bearing the concave grating (1),
characterized in that
the second convex surface (22) of the carrier body is situated in short distance (d) opposite a diode array (3), and that between the second convex surface (22) and the diode array (3) air or another medium is provided.

2. A diode-array spectrometer according to claim 1, characterized in that the second convex surface (22) bears the entrance slit (4).

3. A diode-array spectrometer according to claim 1 or 2, characterized in that the two radii (r₁, r₂) of curvature of the carrier body (2) are only slightly different.

4. A diode-array spectrometer according to at least one of claims 1 to 3, characterized in that the centers of curvature of each convex surface (21, 22) are situated near the apex of the other convex surface (22, 21).

5. A diode-array spectrometer according to at least one of claims 1 to 4, characterized in that the concave grating (1) is holographically corrected.

6. A diode-array spectrometer according to at least one of claims 1 to 5, characterized in that the carrier body (2) is spherical.

7. A diode-array spectrometer according to at least one of claims 1 to 5, characterized in that the carrier body (2) is cylindrical.

## Revendications

1. Spectromètre à barrette de diodes doté d'un réseau concave (1) et d'un support transparent (2), caractérisé en ce que ledit support (2) est une lentille biconvexe dont une face convexe (21) porte le réseau concave (1) et dont la seconde face convexe (22) faisant face à une barrette de diodes (3) est disposée à une faible distance de celle-ci, l'espace qui sépare les deux éléments (22) et (3) étant rempli d'air ou d'un autre milieu.

2. Spectromètre à barrette de diodes selon la revendication 1, caractérisé en ce que la seconde face convexe (22) porte la fente d'entrée (4).

3. Spectromètre à barrette de diodes selon la revendication 1 ou 2, caractérisé en ce que les deux rayons de courbure (r₁, r₂) du support (2) ne présentent qu'un faible écart.

4. Spectromètre à barrette de diodes selon au moins une des revendications 1 à 3, caractérisé en ce que les centres de courbure des deux faces convexes (21, 22) se trouvent respectivement à proximité du sommet de l'autre surface convexe (22, 21).

5. Spectromètre à barrette de diodes selon au moins une des revendications 1 à 4, caractérisé en ce que le réseau concave (1) présente une correction holographique.

6. Spectromètre à barrette de diodes selon au moins une des revendications 1 à 5, caractérisé en ce que le support (2) est de forme sphérique.

7. Spectromètre à barrette de diodes selon au moins une des revendications 1 à 5, caractérisé en ce que le support (2) est de forme cylindrique.
